# NEUE EUROPÄISCHE PATENTSCHRIFT

(11) **EP 0 991 550 B2**
(45) Veröffentlichungstag und Bekanntmachung des Hinweises auf die Entscheidung über den Einspruch: **04.06.2008**
(45) Hinweis auf die Patenterteilung: 18.12.2002
(21) Anmeldenummer: 98941234.1
(22) Anmeldetag: 19.06.1998
(51) Int. Cl.: B60R 21/16

(54) **FLAMMSCHUTZVORRICHTUNG FÜR GASSÄCKE VON AIRBAGMODULEN**
FLAME PROTECTION DEVICE FOR AIR BAGS IN AIR BAG MODULES
DISPOSITIF DE PROTECTION CONTRE LES FLAMMES POUR SACS A GAZ DE COUSSINS GONFLABLES DE SECURITE

(30) Priorität: 23.06.1997 DE 19727832
(43) Veröffentlichungstag der Anmeldung: 12.04.2000
(73) Patentinhaber: Takata-Petri AG, 63743 Aschaffenburg (DE)
(72) Erfinder: PAUSCH, Tobias, D-13189 Berlin (DE); MARKFORT, Dieter, D-13189 Berlin (DE)
(74) Vertreter: Baumgärtel, Gunnar
(86) Internationale Anmeldenummer: PCT/DE1998/001761
(87) Internationale Veröffentlichungsnummer: WO 1998/058823

(56) Entgegenhaltungen:
- EP-A- 0 422 840
- EP-A- 0 677 433
- EP-A- 0 694 444
- WO-A-96/26087
- DE-A- 2 409 069
- DE-A- 4 028 344
- DE-U- 29 606 709
- DE-U- 29 613 781
- US-A- 3 897 961
- US-A- 5 458 366

## Beschreibung

Die Erfindung betrifft eine Flammschutzvorrichtung für Gassäcke von Airbagmodulen nach dem Oberbegriff des Anspruchs 1, wie uns aus der US 3,897,961 A bekannt ist.

Es ist bekannt, daß in Gassäcken von Airbagmodulen häufig Abnäher vorgesehen sind, um den Gassack in seiner Ausdehnung zu begrenzen. Wenn diese Abnäher in unmittelbarer Nähe des Gasgenerators liegen, werden sie durch den heißen Gasstrahl thermisch hoch belastet.

Es ist bekannt, thermisch hoch belastete Teile des Gassacks dadurch zu schützen, daß zusätzliche Teile als Flammschutz angebracht sind, die diese Teile vor dem Aufprall der heißen Gase schützen. So ist aus der DE 41 21 659 C2 ein Airbag bekannt, bei dem über dem Gasgenerator eine Gasgeneratorabdeckung angebracht ist. Diese soll während des Aufblasens den direkten Kontakt zwischen dem Gasgenerator und dem Gassackgewebe verhindern. Das Gas kann dabei sowohl durch Öffnungen an der Vorderseite der Abdeckung als auch seitlich der Abdeckung in den Gassack einströmen. Diese Abdeckung ist nicht für den besonderen Flammschutz von Abnähern im Gassack geeignet.

Der Erfindung liegt die Aufgabe zugrunde, die thermische Belastung von Abnähern in Gassäcken zu verringern.

Erfindungsgemäß wird das gemäß den Merkmalen des Anspruchs 1 erreicht.

Bei einer Flammschutzvorrichtung für Gassäcke von Airbagmodulen unter Verwendung eines Gasgenerators, wobei die Gassäcke mit mindestens einem Abnäher versehen sind und die Flammschutzvorrichtung mit dem Gassack zusammenlegbar ist, ist als Flammschutzvorrichtung mindestens ein den Gasstrahl des Gasgenerators leitendes Teil vorgesehen, das so angeordnet und ausgebildet ist, daß das Gas zwischen den Abnähern zumindest annähernd in Richtung dieser Abnäher strömt. Dabei ist das leitende Teil als Schlauch ausgebildet, der mindestens eine Austrittsöffnung für die aus dem Gasgenerator austretenden Gase aufweist.

Bei dieser Flammschutzvorrichtung wird ein Flammschutz dadurch erreicht, daß die heißen Gase nicht auf die Nähte aufprallen, sondern daß sie umgeleitet werden und in Richtung der Nähte verlaufen. Dadurch erübrigt sich ein besonderer Schutz der Nähte.

Die Erfindung ist für den Schutz unterschiedlich verlaufende Abnäher geeignet.

In einer Ausgestaltung ist vorgesehen, daß die Abnäher zumindest nahezu parallel zueinander verlaufen, daß der Schlauch quer bezüglich der Abnäher verläuft und zwischen den Abnähern mindestens eine Gasaustrittsöffnung aufweist. Bei dieser Konfiguration wird also das Gas nach dem Austritt aus dem Gasgenerator zunächst in Richtung der Abnäher geleitet, tritt aber durch die jeweilige Gasaustrittsöfnung zwischen den Abnähern zumindest annähernd in einer Richtung aus, die dem Verlauf der Abnäher entspricht. Damit wird die thermische Belastung der Abnäher stark reduziert.

Der Schlauch kann bei dieser Anordnung an einem Ende der Abnäher angeordnet sein. In diesem Fall weist der Schlauch deshalb einseitig Gasaustrittsöffnungen auf. Der Schlauch kann aber auch beidseitig von Abnähern verlaufen. In diesem Fall weist der Schlauch deshalb an gegenüberliegenden Seiten Gasaustrittsöffnungen auf.

Eine andere Ausgestaltung besteht darin, daß der Schlauch zwischen zwei Abnähern in deren Richtung verläuft und mindestens eine Gasaustrittsöffnung an der Stirnseite aufweist.

Der verwendete Schlauch kann in unterschiedlicher Weise realisiert werden. So ist der Schlauch in einer ersten Ausführungsform zwischen einer in Längsrichtung gefalteten Gewebelage ausgebildet, indem deren übereinanderliegende freie Kanten mit dem Außenrand des Gassackes verbunden sind. Insbesondere sind bei einem aus einem Ober- und einem Unterteil bestehenden Gassack die Kanten der Gewebelage des Schlauches mit den Kanten des Ober- und Unterteils vernäht. Bei dieser Ausführungsform entsteht also der Schlauch zusammen mit dem Gassack.

Weiterhin kann der Schlauch dadurch hergestellt werden, daß eine Kante einer gesonderten Gewebelage mit der Umfangsnaht des Gassacks und die dieser Kante gegenüberliegende Kante mit einem Abschnitt eines Ober- oder Unterteils des Gassackes verbunden ist, oder daß eine Kante einer Gewebelage mit dem Oberteil und die gegenüberliegende Kante mit dem Unterteil verbunden ist.

Der Schlauch kann auch aus einem Abschnitt des Gassacks geformt sein, indem im Gassack ein eingestülpter Bereich vorgesehen ist, der mit dem Gassack eine gemeinsame Randnaht aufweist.

Schließlich kann auch ein separater Schlauch vorgesehen sein, der an mindestens einer Seite mit dem Gassack verbunden ist.

Die Erfindung soll in Ausführungsbeispielen anhand von Zeichnungen erläutert werden. Es zeigen:
- Fig. 1: eine Draufsicht auf einen Gassack mit senkrecht verlaufenden Abnähern und einseitig quer dazu verlaufendem Schlauch;
- Fig. 2: einen Schnitt durch die Fig. 1, in Richtung der Pfeile II - II gesehen;
- Fig. 3: die Draufsicht auf die Gewebelage zur Herstellung des Schlauches nach den Figuren 1 und 2;
- Fig. 4: eine Draufsicht auf einen Gassack mit waagerecht verlaufenden Abnähern und einseitig quer verlaufendem Schlauch;
- Fig. 5: einen Schnitt durch die Fig. 4, in Richtung der Pfeile V - V gesehen;
- Fig. 6: eine Draufsicht auf einen Gassack, bei dem ein Schlauch beidseitig von Abnähern liegt;
- Fig. 7: einen Schnitt durch die Fig. 6, in Richtung der Pfeile VII - VII gesehen;
- Fig. 8: eine Draufsicht auf einen Gassack, bei dem der Schlauch zwischen zwei Abnähern verläuft;
- Fig. 9: einen Schnitt durch die Fig. 8, in Richtung der Pfeile IX - IX gesehen;
- Fig. 10: eine Draufsicht auf einen Gassack mit kombiniertem Flammschutz;
- Fig. 11: einen Schnitt durch die Fig. 10, in Richtung der Pfeile XI -XI gesehen;
- Fig. 12: eine Draufsicht auf einen Gassack, bei dem der Schlauch durch Einstülpen des Gassacks gebildet ist;
- Fig. 13: einen Schnitt durch den Gassack der Fig. 12, in Richtung der Pfeile XIII - XIII gesehen.

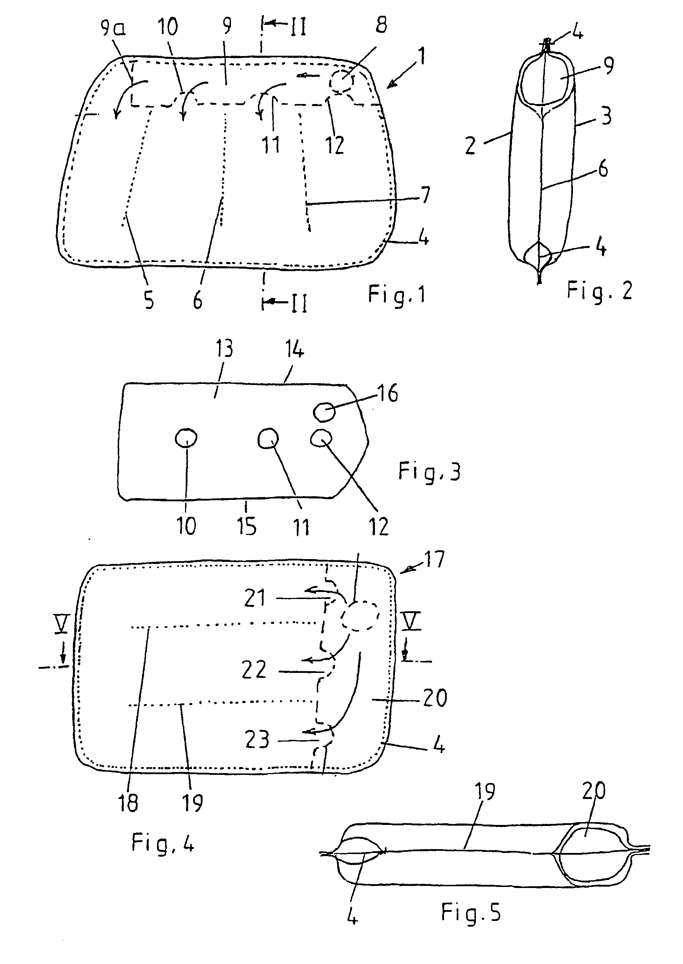

In den Figuren 1 und 2 ist ein Gassack 1 dargestellt, der aus einem Oberteil 2 und einem Unterteil 3 zusammengesetzt ist. Beide Teile sind durch eine Randnaht 4 miteinander verbunden. Zusätzlich sind beide Teile durch drei senkrecht verlaufende Abnäher 5, 6, 7 verbunden. Der Gassack weist einen Einblasmund 8 auf, der an einen nicht dargestellten Gasgenerator angeschlossen ist. Oberhalb der Abnäher 5, 6, 7 ist ein als Flammschutz wirkender Schlauch 9 vorgesehen, der an den Einblasmund 8 angeschlossen ist. Der Schlauch 9 weist zwischen den Abnähern Gasaustrittsöffnungen 10, 11,12 und an der Stirnseite eine Gasaustrittsöffnung 9a auf.

Der Schlauch 9 besteht aus einer Gewebelage 13 (Fig. 3), die so gefaltet wird, daß die Kanten 14, 15 aufeinander liegen. Diese Kanten und die rechte Stirnseite werden zusammen mit dem Oberteil 2 und dem Unterteil 3 mittels der Randnaht 4 vernäht, wie es insbesondere aus Fig. 2 erkennbar ist. Die Gewebelage 13 weist einen Durchbruch 16 auf, der mit dem Einblasmund 8 verbunden wird.

Der Strömungsverlauf der durch den Aufblasmund eintretenden heißen Gase ist aus der Fig. 1 erkennbar. Die Gase treten in der vorliegenden Darstellung senkrecht zur Papierfläche in den Schlauch 9 ein und werden dort in Richtung der Gasaustrittsöffnungen 10 bis 12 umgelenkt. Beim Austritt aus diesen Öffnungen ändert sich die Strömungrichtung nochmals so, daß die Gase etwa parallel zu den Abnähern 5 bis 7 strömen.

In den Figuren 4 und 5 ist ein Gassack 17 mit zwei waagerechten Abnähern 18, 19 und einem senkrecht, rechts neben den Abnähern verlaufenden Schlauch 20 als Flammschutz dargestellt. Dieser weist drei Gasaustrittsöffnungen 21, 22, 23 auf. Die Umlenkung der Strömung erfolgt in gleicher Weise wie beim Ausführungsbeispiel der Figuren 1 bis 3. Auch der Schlauch besteht wie bei diesem Ausführungsbeispiel aus einer Gewebelage, die in gefalteter Lage am Rand des Gassacks mittels der Randnaht 4 mit diesem vernäht wird.

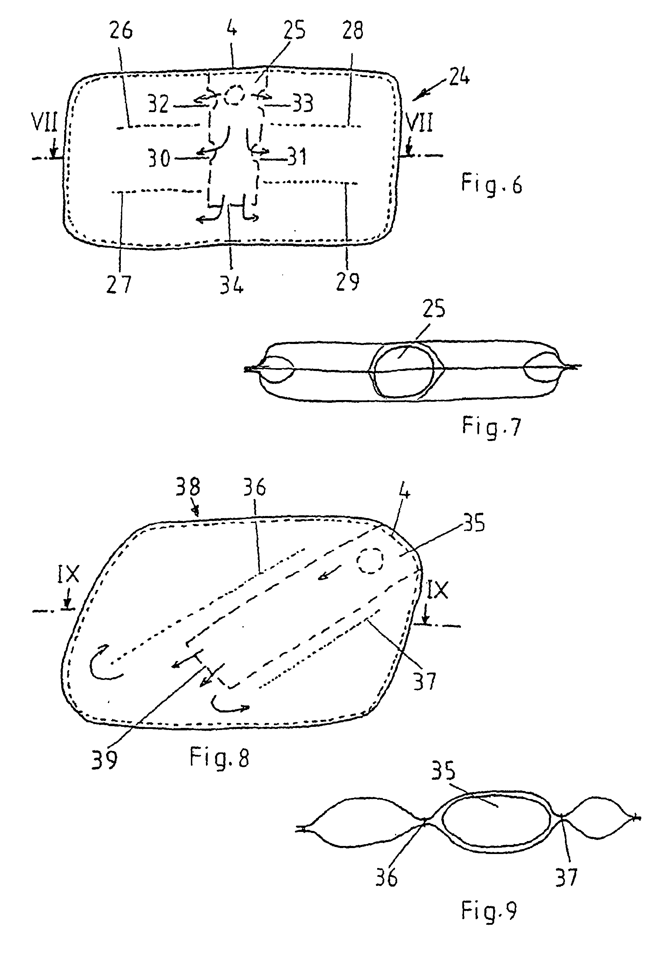

Beim Ausführungsbeispiel der Figuren 6 und 7 ist ein Gassack 24 dargestellt, bei dem als Flammschutz ein Schlauch 25 vorgesehen ist, der in der Mitte des Gassacks angeordnet ist und mit einer Stirnseite mittels der Randnaht 4 am Gassack befestigt ist. Beidseitig des sich quer durch den Gassack erstreckenden Schlauches sind Abnäher 26 bis 29 vorgesehen. Der Gassack weist an gegenüberliegenden Seiten zwischen den Abnähern Gasaustrittsöffnungen 30 und 31 sowie zwischen den Abnähern und der Randnaht 4 Gasaustrittöffnungen 32 bis 34 auf. Die heißen Gase werden, wie bei den vorhergehenden Ausführungsbeipielen beschrieben, in Richtung der Abnäher umgelenkt.

Beim Ausführungsbeispiel der Figuren 8 und 9 erstreckt sich ein Schlauch 35 parallel zu Abnähern 36, 37 in einen Gassack 38 hinein. Der Schlauch ist an einer Stirnseite mittels der Randnaht 4 am Gassack befestigt und weist an der anderen Stirnseite eine Gasaustrittsöffnung 39 auf.

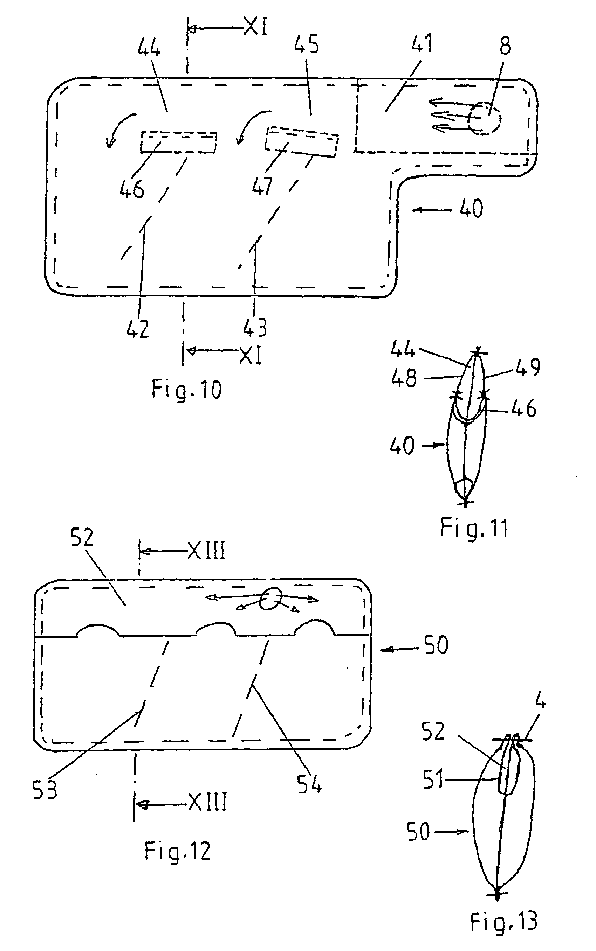

In den Figuren 10 und 11 ist ein Gassack 40 dargestellt, der mehrere Schläuche als Flammschutz aufweist. So ist im Bereich des Einblasmundes 8 ein Schlauch 41 vorgesehen. Weiterhin sind oberhalb von Abnähern 42, 43 schlauchartige Abschnitte 44, 45 vorgesehen. Diese werden im vorliegenden Fall dadurch gebildet, daß Gewebelagen 46, 47 an einem Oberteil 48 und einem Unterteil 49 des Gassackes befestigt sind. Dadurch entsteht zwischen dem jeweiligen Gewebeteil und dem Ober- und Unterteil der schlauchartige Abschnitt 44 bzw. 45.

In den Figuren 12 und 13 ist eine weitere Art der Formung des Schlauches dargestellt. In diesem Fall weist ein Gassack 50 an einer Seite eine Einstülpung 51 auf, wie es aus Fig. 13 erkennbar ist. Diese ist am Rand mittels der Randnaht 4 mit dem Gassack vernäht so daß ein Schlauch 52 entsteht. Dieser verläuft einseitig quer zu Abnähern 53, 54. Die Wirkungsweise entspricht der bei den vorhergehenden Ausführungsbeispielen beschriebenen.

## Patentansprüche

1. Flammschutzvorrichtung für Gassäcke (1) von Airbagmodulen unter Verwendung eines Gasgenerators, wobei die Gassäcke (1) mit mindestens einem Abnäher (5 - 7; 18, 19; 26 - 29; 36, 37; 42, 43; 53, 54) versehen sind und als Flammschutzvorrichtung mindestens ein als Schlauch ausgebildetes, den Gasstrahl des Gasgenerators leitendes Teil (9; 20; 25; 35; 41, 44, 45, 52) vorgesehen ist, das mindestens eine Austrittsöffnung (9a, 10 - 12; 21 - 23; 30 - 34; 39) für die aus dem Gasgenerator austretenden Gase aufweist und das mit einem Gassack in eine gefaltete Lage zusammenlegbar ist,
**dadurch gekennzeichnet,**
**daß** das leitende Teil (9; 20; 25; 35; 41, 44, 45, 52) so angeordnet und ausgebildet ist, daß die Gase nicht auf die Abnäher (5 - 7; 18, 19; 26 - 29; 36, 37; 42, 43; 53, 54) prallen sondern zwischen den Abnähern (5 - 7; 18, 19; 26 - 29; 36, 37; 42, 43; 53, 54) zumindest annähernd in Richtung dieser Abnäher (5 - 7; 18, 19; 26 - 29; 36, 37; 42, 43; 53, 54) strömen.

2. Flammschutzvorrichtung nach Anspruch 1, **dadurch gekennzeichnet, daß** die Abnäher (5, 6, 7; 18, 19; 26 - 29; 42, 43; 53, 54) zumindest nahezu parallel zueinander verlaufen, daß der Schlauch (9; 20; 25; 41, 44, 45; 52) quer bezüglich der Abnäher verläuft und zwischen den Abnähern mindestens eine Gasaustrittsöffnung (10, 11; 22; 30, 31) aufweist.

3. Flammschutzvorrichtung nach Anspruch 1 oder 2, **dadurch gekennzeichnet, daß** der Schlauch (9; 20; 44, 45; 52) an einem Ende der Abnäher (5, 6, 7; 18, 19; 42, 43; 53, 54) angeordnet ist.

4. Flammschutzvorrichtung nach mindestens einem der vorhergehenden Ansprüche, **dadurch gekennzeichnet, daß** der Schlauch (25) beidseitig von Abnähern (26, 27, 28, 29) verläuft.

5. Flammschutzvorrichtung nach Anspruch 1, **dadurch gekennzeichnet, daß** der Schlauch (35) zwischen zwei Abnähern (36, 37) in deren Richtung verläuft und mindestens eine Gasaustrittsöffnung (39) an der Stirnseite aufweist.

6. Flammschutzvorrichtung nach mindestens einem der vorhergehenden Ansprüche, **dadurch gekennzeichnet, daß** der Schlauch zwischen einer in Längsrichtung gefalteten Gewebelage (13) ausgebildet ist, indem deren übereinanderliegenden freien Kanten (14, 15) mit dem Außenrand des Gassackes (1) verbunden sind.

7. Flammschutzvorrichtung nach Anspruch 6, **dadurch gekennzeichnet, daß** die Kanten (14, 15) der Gewebelage (13) des Schlauches mit den Kanten eines aus einem Ober- und Unterteil (2, 3) bestehenden Gassackes (1) vernäht sind.

8. Flammschutzvorrichtung nach mindestens einem der Ansprüche 1 bis 3 sowie 6 und 7, **dadurch gekennzeichnet, daß** der Schlauch **dadurch** geformt ist, daß eine Kante einer gesonderten Gewebelage mit der Umfangsnaht des Gassacks und die dieser Kante gegenüberliegende Kante mit einem Abschnitt eines Ober- oder Unterteils des Gassackes verbunden ist.

9. Flammschutzvorrichtung nach mindestens einem der Ansprüche 1 bis 3 sowie 6 bis 8, **dadurch gekennzeichnet, daß** der Schlauch **dadurch** gebildet ist, daß eine Kante einer Gewebelage (46) mit dem Oberteil (48) und die gegenüberliegende Kante mit dem Unterteil (49) verbunden ist.

10. Flammschutzvorrichtung nach mindestens einem der Ansprüche 1 bis 3 sowie 6 bis 9, **dadurch gekennzeichnet, daß** der Schlauch (52) durch einen eingeschlagenen Bereich des Gassacks (50) gebildet ist, der mit dem Gassack eine gemeinsame Randnaht (4) aufweist.

11. Flammschutzvorrichtung nach mindestens einem der vorhergehenden Ansprüche, **dadurch gekennzeichnet, daß** ein separater Schlauch (25, 35) vorgesehen ist, der an mindestens einer Seite mit dem Gassack verbunden ist.

## Claims

1. Flame protection device for gas bags (1) in airbag modules using a gas generator wherein the gas bags (1) are provided with at least one dart (5 - 7; 18 , 19; 26 - 29; 36, 37; 42, 43; 53, 54) and as flame protection device at least one part (9; 20; 25; 35; 41, 44, 45, 52) is provided which conducts the gas flow from the gas generator and is formed as a tubular hose (9) and which has at least one outlet opening (9a, 10 - 12; 21 - 23; 30 - 34; 39) for the gases emerging from the gas generator and which can be folded along with the gas bag (1),
**characterised in that**
the guiding part (9; 20; 25; 35; 41, 44, 45, 52) is formed and arranged so that the gases do not bounce off the darts (5 - 7; 18, 19; 26 - 29; 36, 37; 42, 43; 53, 54) but flow between the darts (5 --7; 18, 19; 26 - 29; 36, 37; 42, 43; 53, 54) at least approximately in the direction of these darts (5- 7; 18, 19; 26 - 29; 36, 37; 42, 43; 53, 54).

2. Flame protection device according to claim 1, **characterised in that** the darts (5, 6, 7; 18, 19; 26 - 29; 42, 43; 53, 54) run at least approximately parallel to each other, that the tubular hose (9; 20; 25; 41, 44, 45; 52) runs transversely relative to the darts and has at least one gas outlet opening (10, 11; 22; 30, 31) between the darts.

3. Flame protection device according to claim 1 or 2, **characterised in that** the tubular hose (9; 20; 44, 45; 52) is mounted at one end of the darts (5, 6, 7; 18, 19; 42, 43; 53, 54).

4. Flame protection device according to at least one of the preceding claims, **characterised in that** the tubular hose (25) runs each side of the darts (26, 27, 28, 29).

5. Flame protection device according to claim 1, **characterised in that** the tubular hose (35) runs between two darts (36, 37) in the direction thereof and has at least one gas outlet opening (39) on the end side.

6. Flame protection device according to at least one of the preceding claims, **characterised in that** the tubular hose is formed between a fabric layer (13) which is folded in the longitudinal direction, with the superposed free edges (14, 15) being connected to the outer edge of the gas bag (1).

7. Flame protection device according to claim 6, **characterised in that** the edges (14, 15) of the fabric layer (13) of the tubular hose are stitched to the edges of a gas bag (1) consisting of an upper part (2) and lower part (3).

8. Flame protection device according to at least one of claims 1 to 3 and 6 and 7, **characterised in that** the tubular hose is formed by connecting one edge of a separate fabric layer to the circumferential seam of the gas bag and connecting the edge opposite this edge to a section of an upper or lower part of the gas bag.

9. Flame protection device according to at least one of claims 1 to 3 and 6 to 8, **characterised in that** the hose is formed **in that** one edge of a fabric layer (46) is connected to the upper part (48) and the opposite edge is connected to the lower part (49).

10. Flame protection device according to at least one of claims 1 to 3 and 6 to 9, **characterised in that** the tubular hose (52) is formed by a turned-in area of the gas bag (50) which has a common marginal seam (4) with the gas bag.

11. Flame protection device according to at least one of the preceding claims, **characterised in that** a separate tubular hose (25, 35) is provided which is connected to the gas bag on at least one side.

## Revendications

1. Dispositif de protection contre les flammes pour des sacs à gaz (1) de modules de coussins gonflables de sécurité lors de l'utilisation d'un générateur de gaz, les sacs à gaz (1) étant pourvus d'au moins une pince (5-7 ; 18, 19 ; 26-29 ; 36, 37 ; 42, 43 ; 53, 54) et au moins une partie de guidage (9 ; 20 ; 25 ; 35 ; 41, 44, 45, 52) conçue comme tuyau, guidant le jet de gaz du générateur de gaz, étant prévue comme dispositif de protection contre les flammes, laquelle partie présente au moins une ouverture de sortie (9a, 10-12 ; 21-23 ; 30-34 ; 39) pour les gaz sortant du générateur de gaz et qui peut être repliée dans une position pliée avec un sac à gaz,
**caractérisé en ce que**
la partie de guidage (9 ; 20 ; 25 ; 35 ; 41, 44, 45, 52) est conçue et agencée de telle sorte que les gaz ne heurtent pas les pinces (5-7; 18, 19 ; 26-29 ; 36, 37; 42, 43 ; 53, 54) mais circulent entre les pinces (5-7 ; 18, 19 ; 26-29 ; 36, 37 ; 42, 43 ; 53, 54) au moins approximativement dans la direction de ces pinces (5-7 ; 18, 19 ; 26-29 ; 36, 37 ; 42, 43 ; 53, 54).

2. Dispositif de protection contre les flammes selon la revendication 1, **caractérisé en ce que** les pinces (5, 6, 7 ; 18, 19 ; 26-29 ; 42 ; 43 ; 53, 54) s'étendent au moins de manière presque parallèle les unes par rapport aux autres, **en ce que** le tuyau (9; 20 ; 25 ; 41, 44, 45 ; 52) s'étend transversalement par rapport aux pinces et présente au moins une ouverture de sortie du gaz (10, 11 ; 22 ; 30, 31) entre les pinces.

3. Dispositif de protection contre les flammes selon la revendication 1 ou 2, **caractérisé en ce que** le tuyau (9 ; 20 ; 25 ; 41, 44, 45 ; 52) est disposé à une extrémité des pinces (5, 6, 7 ; 18, 19 ; 26-29 ; 42 ; 43 ; 53, 54).

4. Dispositif de protection contre les flammes selon au moins l'une quelconque des revendications précédentes, **caractérisé en ce que** le tuyau (25) s'étend des deux côtés de pinces (26, 27, 28, 29).

5. Dispositif de protection contre les flammes selon la revendication 1, **caractérisé en ce que** le tuyau (5) s'étend entre deux pinces (36, 37), dans la direction de ces dernières et présente au moins une ouverture de sortie du gaz (39) au niveau du côté frontal.

6. Dispositif de protection contre les flammes selon l'une quelconque des revendications précédentes, **caractérisé en ce que** le tuyau est formé à l'intérieur d'une nappe de tissu (13) repliée dans la direction longitudinale, par le fait que les bords libres superposés (14, 15) de la nappe de tissu sont reliés au bord extérieur du sac à gaz (1).

7. Dispositif de protection contre les flammes selon la revendication 6, **caractérisé en ce que** les bords (14, 15) de la nappe de tissu (13) du tuyau sont cousus avec les bords d'un sac à gaz (1) constitué par une partie supérieure et une partie inférieure (2, 3).

8. Dispositif de protection contre les flammes selon au moins l'une des revendications 1 à 3 et 6 et 7, **caractérisé en ce que** le tuyau est formé de telle sorte qu'un bord d'une nappe de tissu particulière est relié à la couture périphérique du sac à gaz et que le bord, qui est situé à l'opposé de ce bord, est relié à un morceau d'une partie supérieure ou d'une partie inférieure du sac à gaz.

9. Dispositif de protection contre les flammes selon au moins l'une des revendications 1 à 3 et 6 à 8, **caractérisé en ce que** le tuyau est formé de telle sorte qu'un bord d'une nappe de tissu (46) est relié à la partie supérieure (48) et le bord opposé est relié à la partie inférieure (49).

10. Dispositif de protection contre les flammes selon au moins l'une des revendications 1 à 3 et 6 à 9, **caractérisé en ce que** le tuyau (52) est formé par une partie rabattue du sac à gaz (50), qui possède une couture marginale commune (4) avec le sac à gaz.

11. Dispositif de protection contre les flammes selon au moins l'une des revendications précédentes, **caractérisé en ce qu'**il est prévu un tuyau séparé (25, 35), qui est relié, sur au moins un côté, au sac à gaz.
